**Europäisches Patentamt**

**European Patent Office**

**Office européen des brevets**

(11) Veröffentlichungsnummer : **0 376 134 B1**

(12) # EUROPÄISCHE PATENTSCHRIFT

(45) Veröffentlichungstag der Patentschrift :
**06.05.92 Patentblatt 92/19**

(51) Int. Cl.$^5$ : **B65C 9/16,** F16D 1/09

(21) Anmeldenummer : **89123505.3**

(22) Anmeldetag : **20.12.89**

(54) **Mit mindestens einem Etikettenentnahmeelement bestückter Träger einer Etikettierstation.**

(30) Priorität : **30.12.88 DE 3844288**

(43) Veröffentlichungstag der Anmeldung :
**04.07.90 Patentblatt 90/27**

(45) Bekanntmachung des Hinweises auf die
Patenterteilung :
**06.05.92 Patentblatt 92/19**

(84) Benannte Vertragsstaaten :
**DE ES FR GB IT**

(56) Entgegenhaltungen :
**CH-A- 493 747**
**DE-A- 2 629 376**
**US-A- 3 656 785**

(73) Patentinhaber : **ETI-TEC MASCHINENBAU GMBH**
**Feldheider Strasse 45**
**W-4006 Erkrath 2 (DE)**

(72) Erfinder : **Müller, Paul**
**Kleinschmidthauser Weg 40**
**W-4000 Düsseldorf 30 (DE)**
Erfinder : **Zodrow, Rudolf**
**Lichtstrasse 37**
**W-4000 Düsseldorf (DE)**
Erfinder : **Höveler, Egon**
**Sauerbruchstrasse 20**
**W-5657 Haan (DE)**

## Beschreibung

Die Erfindung bezieht sich auf einen mit mindestens einem Etikettenentnahmeelement bestückten Träger einer Etikettierstation für Gegenstände, insbesondere Gefäße, bei dem jedes Entnahmeelement auf einer im Träger drehbar gelagerten Antriebswelle angeordnet ist, die über ein auf ihr in der Nähe ihres einen Endes angeordnetes Ritzel mit einem Antrieb gekuppelt ist.

Bei einem solchen Träger besteht der Antrieb, mit dem das Entnahmeelement gekuppelt ist, in der Regel aus einem Ungleichförmigkeitsgetriebe, so daß bei Drehung des Trägers das Entnahmeelement mit unterschiedlicher Winkelgeschwindigkeit verschwenkt oder gedreht wird, wie es an den einzelnen Stationen, und zwar einer Beleimungsvorrichtung, einer Etikettenvorratsstation und einer Etikettenübertragungsstation, an denen das Entnahmeelement bei Drehung des Trägers entlang bewegt wird, gefordert wird. Um bei Installation einer Etikettierstation das mit dem Antrieb gekuppelte Entnahmeelement in bezug auf die einzelnen Stationen ausrichten zu können, ist es ferner üblich, die drehfeste Kupplung zwischen Ritzel und Antriebswelle lösbar auszuführen. Sofern die Kupplung zwischen Ritzel und Antriebswelle in einer Keilverzahnung besteht, läßt sich eine Einstellung nur nach Abziehen des Ritzels von der Keilverzahnung der Antriebswelle und nur stufenweise entsprechend dem Modul der Keilverzahnung durchführen. Diese Art der Umstellung setzt voraus, daß das Ritzel einigermaßen leicht zugänglich ist.

Eine stufenlose Einstellung des Ritzels auf der Antriebswelle ohne Abziehen des Ritzels von der Antriebswelle ist bei einer im Sinne des Artikels 54 (3) EPÜ älteren Patentanmeldung EP-A-341400 (deutsche Patentanmeldung P 38 11 866.1-27) dadurch verwirklicht, daß das Ritzel mittels eines Ringspannelementes auf der Antriebswelle festgeklemmt ist. Die für die Verspannung des Ringspannelementes notwendige Spannkraft wird von einem als Platte ausgebildeten Druckelement aufgebracht, das an der benachbarten Stirnseite der Antriebswelle angeschraubt ist. Den erwähnten Vorteilen der stufenlosen Einstellbarkeit des auf der Antriebswelle verbleibenden Ritzels steht der Nachteil entgegen, daß die konstruktive Gestaltungsmöglichkeit für den Antriebsmechanismus eingeengt wird, weil auf die freie Zugänglichkeit zu dem Ringspannelement für die Bedienungsperson geachtet werden muß. Bei dem Ausführungsbeispiel des Gegenstandes der älteren Patentanmeldung, bei dem der Träger anstelle der allgemein üblichen mittigen Lagerung außen gelagert ist, ist das Ringspannelement nicht frei zugänglich.

Der Erfindung liegt die Aufgabe zugrunde, bei einem mit mindestens einem Entnahmeelement bestückten Träger einer Etikettierstation eine einfache Verstellung des Entnahmeelementes gegenüber dem Antrieb zu schaffen.

Diese Aufgabe wird erfindungsgemäß bei einem Träger der eingangs genannten Art dadurch gelöst, daß das Ritzel mittels eines Ringspannelementes auf der Antriebswelle festgeklemmt ist und daß auf das Ringspannelement ein Druckelement in axiale Richtung einwirkt, das an der dem einen Ende benachbarten Stirnseite der Antriebswelle angeordnet und mit einer Zugstange gekuppelt ist, die durch die hohl ausgebildete Antriebswelle verläuft und an der anderen Stirnseite der Antriebswelle abgestützt ist.

Bei der erfindungsgemäßen Lösung braucht für eine gewünschte Einstellung des Entnahmeelementes lediglich die an der leicht zugänglichen oberen Stirnseite verspannte Zugstange gelöst zu werden. Da für das Lösen des Ritzels auf der Antriebswelle das untere Ende der Antriebswelle nicht länger zugänglich zu sein braucht, hat der Konstrukteur bei der Gestaltung des in diesem Bereich angeordneten Antriebs völlige Freiheit.

Nach einer Ausgestaltung der Erfindung besteht das Ringspannelement aus zwei im axialen Querschnitt konischen Ringen, von denen der eine an einem Widerlager des Ritzels und der andere an dem Druckelement abgestützt ist.

Nach einer weiteren Ausgestaltung der Erfindung weist das Ringspannelement einen die konischen Ringe außen umgebenden und sie axial mit einer Schulter abstützenden Stützring auf, der mit einer an der Zugstange angeschlossenen Druckplatte gelenkig gekuppelt ist. Diese Ausgestaltung hat im Vergleich mit einer starren Ausführung von Stützring und Druckplatte den Vorteil, daß eine Verbiegung der Druckplatte aufgrund der auf sie von der Zugstange einwirkenden Spannkraft keine Aufweitung des Stützringes zur Folge hat. Gleichwohl ist gewährleistet, daß durch einen Schlag mit dem Hammer auf die Zugstange über die Druckplatte eine axiale Kraft zum Lösen auf den Stützring übertragen wird.

Um die hohle Antriebswelle vor dem Eintritt von Wasser zu schützen, ist nach einer weiteren Ausgestaltung der Erfindung vorgesehen, daß als Abstützung der Zugstange an der Stirnseite der Antriebswelle eine auf dem endseitig als Schraubenbolzen ausgebildeten Zugstange sitzende Schraubenmutter dient, die von einer auf den Schraubenbolzen aufgeschraubten und auf ihm gegen Verdrehung durch ein Klemmelement gesicherten Kappe abgedeckt ist, die mit einem Dichtungskragen an der Stirnseite der Antriebswelle anliegt.

Im folgenden wird die Erfindung anhand einer ein Ausführungsbeispiel darstellenden Zeichnung näher erläutert. Im einzelnen zeigen:

Fig. 1 eine Etikettierstation in schematischer Darstellung in Aufsicht,

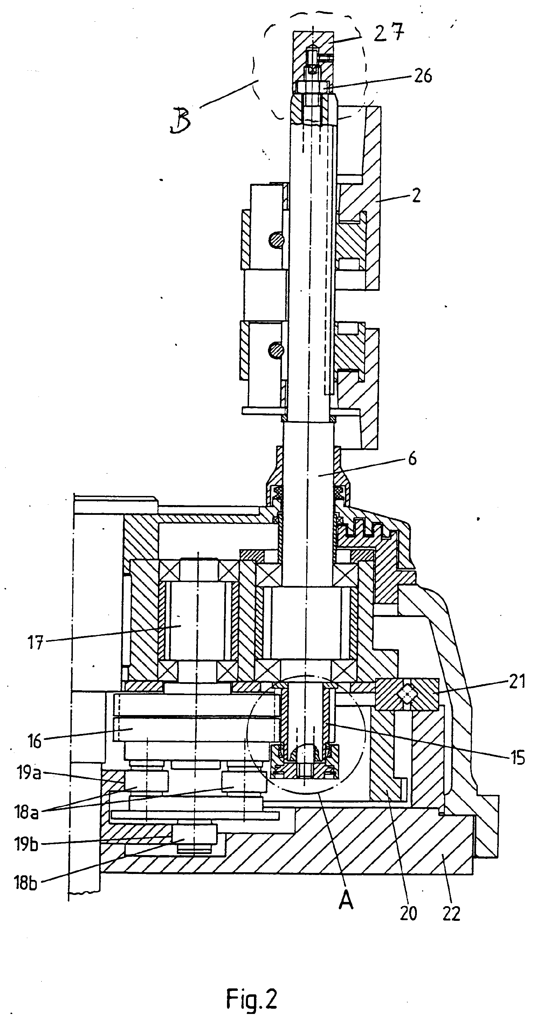

Fig. 2 die Etikettierstation gemäß Fig. 1 im halben Axialschnitt durch die Welle eines Entnahmeelementes und

Fig. 3 einen Ausschnitt A der Fig. 2 in vergrößerter Darstellung

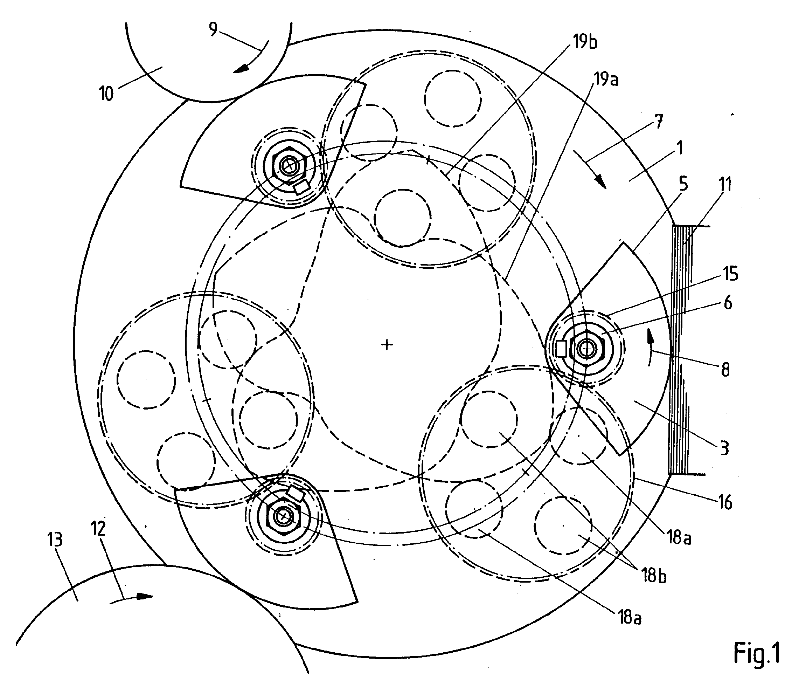

Die in Fig. 1 dargestellte Etikettierstation besteht aus einem tellerförmigen Träger 1, auf dem unter gleichen Winkeln 3 Etikettenentnahmeelemente 2,3,4 angeordnet sind. Jedes Entnahmeelement 2,3,4 weist eine zylindrisch gekrümmte Aufnahmefläche 5 für ein Etikett auf und ist zwischen dieser und deren Krümmungsmittelpunkt auf einer Antriebswelle 6 gelagert. Bei Drehung des Trägers 1 in Richtung des Pfeils 7 drehen sich zwangsläufig durch einen noch zu beschreibenden Antrieb die Entnahmeelemente 2,3,4 in Richtung des Pfeils 8, also gegensinnig zum Träger 1.

Bei dieser Drehung des Trägers 1 werden die Entnahmeelemente 2,3,4 an verschiedenen Stationen, und Leimwalze 10, einem feststehenden Etikettenkasten 11 mit einem darin befindlichen Etikettenstapel und einem in Richtung des Pfeils 12 rotierenden Greiferzylinder 13 unter Ausführung einer Abwälzbewegung vorbeibewegt. Dabei wird zunächst die Aufnahmefläche 5 eines jeden Entnahmeelementes 2 durch die Leimwalze 10 beleimt. Beim Abwälzen an dem vorderen Etikett des im Etikettenkasten 11 befindlichen Etikettenstapels wird das vordere Etikett infolge der Haftwirkung des Leims an der Aufnahmefläche 5 dem Etikettenstapel entnommen und bei weiterer Drehung des Trägers 1 dem Greiferzylinder 13 zugeführt, der es von der Aufnahmefläche 5 abnimmt und auf hier nicht dargestellte, an ihm vorbeibewegte Gegenstände, wie Flaschen, überträgt.

Auf dem unteren Ende einer jeden Antriebswelle 6 sitzt ein Ritzel 15, das mit einem Zahnrad 16 im Eingriff steht. Das Zahnrad 16 ist mit einem Lagerzapfen 17 im Träger 1 drehbar gelagert und trägt an seiner Unterseite 2 gegeneinander um 90° versetzte Paare Eingriffsglieder 18a,18b, die mit zwei ortsfesten Auskurven 19a,19b zusammenwirken. Die Form der Kurven 19a,19b ist so gewählt, daß bei gleichförmiger Drehung des Trägers 1 die Entnahmeelemente 2,3,4 derart ungleichförmig gedreht werden, daß unter Berücksichtigung der Geometrie der Entnahmeelemente 5 und ihrer Lagerung sich die Aufnahmeflächen 5 der Entnahmeelemente 2,3,4 an den Stationen 10,11,12 abwälzen.

Für die Drehbewegung des Trägers 1 ist dieser mit einem im äußeren Bereich des Trägers 1 angeordneten Zahnkranz 20 drehfest verbunden und über ein Außenlager 21 im Maschinengestell 22 drehbar gelagert. Aufgrund dieser Art der Lagerung und des Antriebes ist das untere Ende der Antriebswelle 6 mit dem darauf sitzenden Ritzel 15 nicht frei zugänglich.

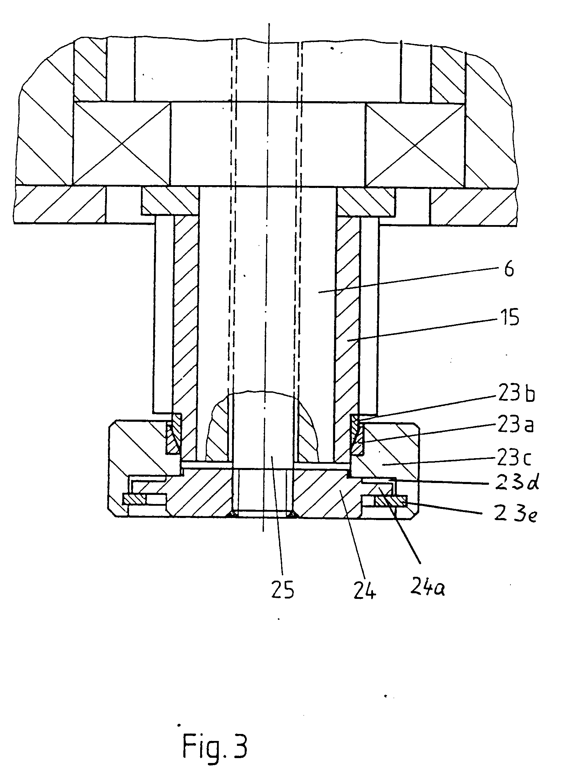

Wie es sich aus der vergrößerten Darstellung der Fig. 3 entnehmen läßt, trägt das Ritzel 15 an seinem unteren Rand eine Spannhülse 22, auf der ein Ringspannelement sitzt, das aus zwei im Querschnitt konischen, axial gegeneinander verschiebbaren Ringen 23a,23b und einem diese Ringe 23a, 23b außen abstützenden Stützring 23c besteht. Der Stützring 23c hat eine von einer inneren Stufe gebildete Schulter, an der sich der äußere Ring 23a stirnseitig abstützt. Der Stützring 23c ist gelenkig mit einem als Platte ausgebildeten Druckelement 24 gekuppelt, in dem es mit einem äußeren schmaleren Rand 24a in einer inneren Ringnut liegt, die von einer inneren Stufe 23d des Stützringes 23c und einem in ihr gehaltenen Federring 23e gebildet ist. Das Druckelement 24 ist mit einer Zugstange 25 verbunden, die sich durch die hohl ausgebildete Antriebswelle 6 bis zu deren oberen Stirnseite erstreckt. An dieser Stirnseite ist die Zugstange 25 als Schraubenbolzen ausgebildet und trägt eine Spannmutter 26, mit der sich die Zugstange 25 an dieser Stirnseite der Antriebswelle 6 abstützt. Durch Spannen und Lösen der Spannmutter 26 ist es also möglich, über die Zugstange 25 und das Druckelement 24 das Ringspannelement 23a-23c zu spannen oder zu lösen. Beim Spannen wird radialer Druck auf die Spannhülse 22 des Ritzels 15 ausgeübt und dieses dadurch auf der Antriebswelle 6 festgeklemmt. Nach Lösen des Ringspannelementes 23a-23c löst sich die Verklemmung zwischen der Spannhülse 22 und der Antriebswelle 6, so daß das Entnahmeelement mit der Welle 6 gegenüber dem Ritzel 15 für Einstellzwecke verdreht werden kann.

Um das Eindringen von Wasser in die hohle Antriebswelle zu verhindern, ist der Schraubenbolzen über die Spannmutter 26 hinaus verlängert und auf ihm eine Kappe 27 aufgeschraubt, die mit einer Klemmschraube gegen Verdrehung gesichert werden kann und mit einem stirnseitigen Dichtungskragen sich an der Stirnseite der Antriebswelle 6 abstützt.

**Patentansprüche**

1. Mit mindestens einem Etikettenentnahmeelement (2) bestückter Träger (1) einer Etikettierstation für Gegenstände, insbesondere Gefäße, bei dem jedes Entnahmeelement (2) auf einer im Träger (1) drehbar gelagerten Antriebswelle (6) angeordnet ist, die über ein auf ihr in der Nähe ihres einen Endes angeordnetes Ritzel (15) mit einem Antrieb (16, 18a,18b) gekuppelt ist, **dadurch gekennzeichnet,** daß das Ritzel (15) mittels eines Ringspannelementes (23a-23b) auf der Antriebswelle (6) festgeklemmt ist und daß auf das Ringspannelement (23a-23c) ein Druckelement (24) in axialer Richtung einwirkt, das an der dem einen Ende benachbarten Stirnseite der Antriebswelle (6) angeordnet ist und mit einer Zugstange (25) gekuppelt ist, die durch die hohl ausgebildete Antriebswelle (6) verläuft und an der anderen Stirnseite der Antriebswelle (6) abgestützt ist.

2. Träger nach Anspruch 1, **dadurch gekennzeichnet,** daß das Ringspannelement im axialen Querschnitt konische Ringe (23a,23b) aufweist, von denen der eine an einem Widerlager des Ritzels (15) und der andere an dem Druckelement (24) abgestützt ist.

3. Träger nach Anspruch 2, **dadurch gekennzeichnet,** daß das Ringspannelement einen die konischen Ringe (23a,23b) außen umgebenden und sie mit einer Schulter abstützenden Stützring (23c) aufweist, der mit einer an der Zugstange (25) angeschlossenen Druckplatte als Druckelement gelenkig gekuppelt ist.

4. Träger nach einem der Ansprüche 1 bis 3, **dadurch gekennzeichnet,** daß als Abstützung der Zugstange (25) an der anderen Stirnseite der Antriebswelle (6) eine auf der endseitig als Schraubenbolzen ausgebildeten Zugstange (25) sitzenden Schraubenmutter (26) dient, die von einer auf den Schraubenbolzen aufgeschraubten und auf ihm gegen Verdrehung durch ein Klemmelement gesicherten Kappe (27) abgedeckt ist, die mit einem Dichtungskragen an der Stirnseite der Antriebswelle (6) anliegt.

## Claims

1. Support (1) for a labelling station equipped with at least one label transfer segment (2), for articles, particularly containers, in which each transfer segment (2) is disposed on a drive shaft (6) rotatably mounted in the support (1), said drive shaft being coupled by a pinion (15) mounted thereon in the vicinity of one of its ends to a drive system (16, 18a, 18b), characterised in that the pinion (15) is securely clamped to the drive shaft (6) by means of an annular clamp member (23a-23b), and in that there acts upon the annular clamp member (23a-23c) in an axial direction a pressure member (24), which is disposed on the end surface of the drive shaft (6) adjacent to one end, and is coupled to a connecting rod (25) which passes through the hollow drive shaft (6), and is supported on the other end surface of the drive shaft (6).

2. Support according to Claim 1, characterised in that the annular clamping member has in axial cross-section conical rings (23a, 23b) of which one is supported on an abutment of the pinion (15), and the other on the pressure member (24).

3. Support according to Claim 2, characterised in that the annular clamp member has a bearing ring (23c) externally surrounding the conical rings (23a, 23b) and supporting them with a shoulder, said bearing ring being jointed to a pressure plate connected to the connecting rod (25) as a pressure member.

4. Support according to one of Claims 1 to 3, characterised in that a nut (26), sitting on the connecting rod (25) whose end is in the form of a threaded bolt, serves as a support for the connecting rod (25) at the other end surface of the drive shaft (6), said nut (26) being covered by a cap (27) screwed on to the threaded bolt and secured against rotation thereon by a clamp member, said cap bearing against the end surface of the drive shaft (6) with a seal collar.

## Revendications

1. Support (1) d'un poste d'étiquetage d'objets, notamment de récipients, équipé d'au moins un élément de transfert d'étiquettes (2), dans lequel chaque élément de transfert (2) est placé sur un arbre entraînement (6) monté tournant dans le support (1), lequel arbre est accouplé avec un mécanisme d'entraînement (16, 18a, 18b), par un pignon (15) placé à proximité de l'une de ses extrémités, caractérisé en ce que le pignon (15) est fixement calé sur l'arbre d'entraînement (6) au moyen un élément de serrage annulaire (23a - 23b) et en ce que sur l'élément de serrage annulaire (23a - 23c) agit axialement un élément de pression (24) qui est placé sur le côté frontal de l'arbre d'entraînement (6), voisin d'une extrémité, et qui est accouplé avec une tringle de traction (25) qui traverse l'arbre d'entraînement (6) creux et prend appui contre l'autre côté frontal de l'arbre d'entraînement (6).

2. Support selon la revendication 1, caractérisé en ce que l'élément de serrage annulaire présente dans sa section transversale axiale, des anneaux coniques (23a, 23b) dont l'un prend appui contre une butée du pignon (15) et l'autre, contre l'élément de pression (24).

3. Support selon la revendication 2, caractérisé en ce que l'élément de serrage annulaire présente un anneau d'appui (23c) entourant les anneaux coniques (23a, 23b) de l'extérieur et les soutenant par un épaulement, lequel anneau d'appui est accouplé de manière articulée, avec une plaque de pression raccordée à la tringle de traction (25) et servant d'élément de pression.

4. Support selon l'une des revendications 1 à 3, caractérisé en ce qu'il est prévu comme appui pour la tringle de traction (25) contre l'autre côté frontal de l'arbre d'entraînement (6), un écrou de vis (26) placé sur la tringle de traction (25) dont l'extrémité est conformée en boulon, lequel écrou est recouvert par un chapeau (27) vissé sur le boulon et bloqué en rotation par un élément de blocage, lequel chapeau s'applique par un collet d'étanchéité contre le côté frontal de l'arbre d'entraînement (6).

Fig.1

EP 0 376 134 B1

6

Fig.2

Fig. 3